# EUROPEAN PATENT SPECIFICATION

(11) **EP 2 628 976 B1**
(45) Date of publication and mention of the grant of the patent: **18.03.2015**
(21) Application number: 11832474.8
(22) Date of filing: 06.10.2011
(51) Int. Cl.: F16F 15/134, F16F 15/30, F16J 15/06, F16F 15/16

(54) **TORQUE FLUCTUATION ABSORBING DEVICE**
VORRICHTUNG ZUR DÄMPFUNG EINER DREHMOMENTSCHWANKUNG
DISPOSITIF D'ABSORPTION DE FLUCTUATIONS DE COUPLE

(30) Priority: 14.10.2010 JP 2010231095
(43) Date of publication of application: 21.08.2013
(73) Proprietor: Aisin Seiki Kabushiki Kaisha, Aichi 448-8650 (JP)
(72) Inventor: KAWAZOE, Hiroshi, Kariya-shi, Aichi 448-8650 (JP); MIYAZAWA, Tetsuhiro, Kariya-shi, Aichi 448-8650 (JP); EBATA, Masaru, Kariya-shi, Aichi 448-8650 (JP); MORI, Masato, Kariya-shi, Aichi 448-8650 (JP)
(74) Representative: TBK
(86) International application number: PCT/JP2011/073063
(87) International publication number: WO 2012/050039

(56) References cited:
- EP-A2- 0 763 673
- WO-A1-99/31405
- JP-A- 6 147 272
- JP-A- 2006 234 058
- JP-U- H04 136 342

## Description

### [Technical Field]

The present invention relates to a torque fluctuation absorbing apparatus for absorbing a fluctuating torque between rotary members.

### [Background Art]

For example, in hybrid vehicles, a torque fluctuation absorbing apparatus is provided in a power transmission path between an engine and a motor generator (or transmission) to absorb (suppress) a fluctuating torque generated between the engine and the motor generator (or transmission). The torque fluctuation absorbing apparatus has a damper part for absorbing the fluctuating torque by an elastic force. Such torque fluctuation absorbing apparatus may be provided in a flywheel. In the torque fluctuation absorbing apparatus provided in the flywheel, there is ones in which the damper part is accommodated in the rotary member, a space accommodating the damper part is filled with lubricating oil or grease that lubricates the damper part, and a clearance between the rotary members is sealed by a seal member.

For example, Patent Literature 1 discloses that viscous fluid filled in an annular space defined by a first flywheel, drive plate, and a boss of a second flywheel is sealed in by sealing a clearance between an inner circumferential end of the drive plate coupled to the first flywheel and the boss of the second flywheel with an annular seal member fitted into a groove formed in the boss of the second flywheel.

Patent Literature 2 discloses that lubricating oil filled in a space that stores a first flywheel is sealed in by sealing a clearance between a supporting part of a second flywheel and an inner cylindrical part of a second plate of the first flywheel with a seal ring fitted into a groove formed in the supporting part of the second flywheel.

EP 0 763 673 A2 discloses a two-mass type of flywheel device in which a first flywheel 5 is fixedly connected to a spring holding plate 30 in which the rotation of the first flywheel is transmitted to a second flywheel 14 by springs 12. The spring holding plate 30 is disposed to define an oil chamber 32 together with the first wheel 5. Reference numeral 34 denotes an oil seal to keep the oil chamber 32 fluidtight.

### [Citation List]

### [Patent Literature]

[Patent Literature 1] Japanese Patent Kokai JP-A-H06-346945
[Patent Literature 2] Japanese Patent Kokai JP-A-2010-31888 & WO-A-2010010896

### [Summary of Invention]

### [Technical Problem]

However, in the seal structure disclosed in Patent Literature 1, when the drive plate and the second flywheel rotate relative to each other, the seal member may slip against both of the drive plate and the second flywheel and therefore, disadvantageously, the performance of the seal member degrades due to an increase in hysteresis, and the seal member wears due to poor lubrication of viscous fluid.

In the seal structure disclosed in Patent Literature 2, since a tongue part of the seal ring is in contact with the inner cylindrical part, when an external pressure (for example, water pressure) is applied, foreign materials (for example, muddy water) are easy to enter into the storage space, thereby causing damage of components in the storage space (for example, components of a damper mechanism) or breakage in the worst case. In the seal structure disclosed in Patent Literature 2, since lubricating oil is hard to accumulate in the storage space at a position to receive the tongue part of the seal ring, lubricating oil will be in short for the seal ring and thus, the seal member wears, possibly leading to lowering of the sealability and the leakage of the lubricating oil.

It is a main object of the present invention to provide a torque fluctuation absorbing apparatus in which a clearance between rotary members can be properly sealed with a seal member.

The object is solved by the features defined in claim 1.

### [Solution to Problem]

In an aspect of the present invention, a torque fluctuation absorbing apparatus comprises: a rotatably-arranged first rotary member; a second rotary member arranged rotatably relative to the first rotary member; a damper part that absorbs fluctuating torque caused by torsion between the first rotary member and the second rotary member, the damper part being accommodated in an interior space surrounded by the first rotary member and the second rotary member; a seal member that seals a clearance between the first rotary member and the second rotary member to seal in a fluid stored in the interior space; and a fluid storing part that adjusts entrance/exit of the fluid stored in the interior space and stores the fluid lubricating the seal member.

### [Advantageous Effects of Invention]

According to the present invention, the fluid is easily accumulated in the fluid storing part, and the fluid accumulated in the fluid storing part lubricates the seal member, suppressing the wear of the seal member due to shortage of the fluid. Moreover, according to the present invention, the seal member is attached in (to) the clearance between the first rotary member and the second rotary member, foreign materials (for example, water, muddy water, dust) can be prevented from entering into the interior of the apparatus.

### [Brief Description of Drawings]

Fig. 1 is a radial sectional view schematically showing a structure of a torque fluctuation absorbing apparatus in accordance with Example 1 of the present invention,
Fig. 2 is an enlarged sectional view schematically showing a seal structure of the torque fluctuation absorbing apparatus in accordance with Example 1 of the present invention,
Fig. 3 is an enlarged sectional view schematically showing a seal structure of a torque fluctuation absorbing apparatus in accordance with Example 2 of the present invention,
Fig. 4 is an enlarged sectional view schematically showing a seal structure of a torque fluctuation absorbing apparatus in accordance with Example 3 of the present invention,
Fig. 5 is an enlarged sectional view schematically showing a seal structure of a torque fluctuation absorbing apparatus in accordance with Example 4 of the present invention,
Fig. 6 is an enlarged sectional view schematically showing a seal structure of a torque fluctuation absorbing apparatus in accordance with Example 5 of the present invention,
Fig. 7 is an enlarged sectional view schematically showing a seal structure of a torque fluctuation absorbing apparatus in accordance with Example 6 of the present invention,
Fig. 8 is an enlarged sectional view schematically showing a seal structure of a torque fluctuation absorbing apparatus in accordance with Example 7 of the present invention,
Fig. 9 is an enlarged sectional view schematically showing a seal structure of a torque fluctuation absorbing apparatus in accordance with Example 8 of the present invention,
Fig. 10 is an enlarged sectional view schematically showing a seal structure of a torque fluctuation absorbing apparatus in accordance with Example 9 of the present invention,
Fig. 11 is an enlarged sectional view schematically showing a seal structure of a torque fluctuation absorbing apparatus in accordance with Example 10 of the present invention,
Fig. 12 is an enlarged sectional view schematically showing a seal structure of a torque fluctuation absorbing apparatus in accordance with Example 11 of the present invention,
Fig. 13 is an enlarged sectional view schematically showing a seal structure of a torque fluctuation absorbing apparatus in accordance with Example 12 of the present invention,
Fig. 14 is an enlarged sectional view schematically showing a seal structure of a torque fluctuation absorbing apparatus in accordance with Example 13 of the present invention,
Fig. 15 is an enlarged sectional view schematically showing a seal structure of a torque fluctuation absorbing apparatus in accordance with Example 14 of the present invention, and
Fig. 16 is an enlarged sectional view schematically showing a seal structure of a torque fluctuation absorbing apparatus in accordance with Example 15 of the present invention.

### [Description of Modes]

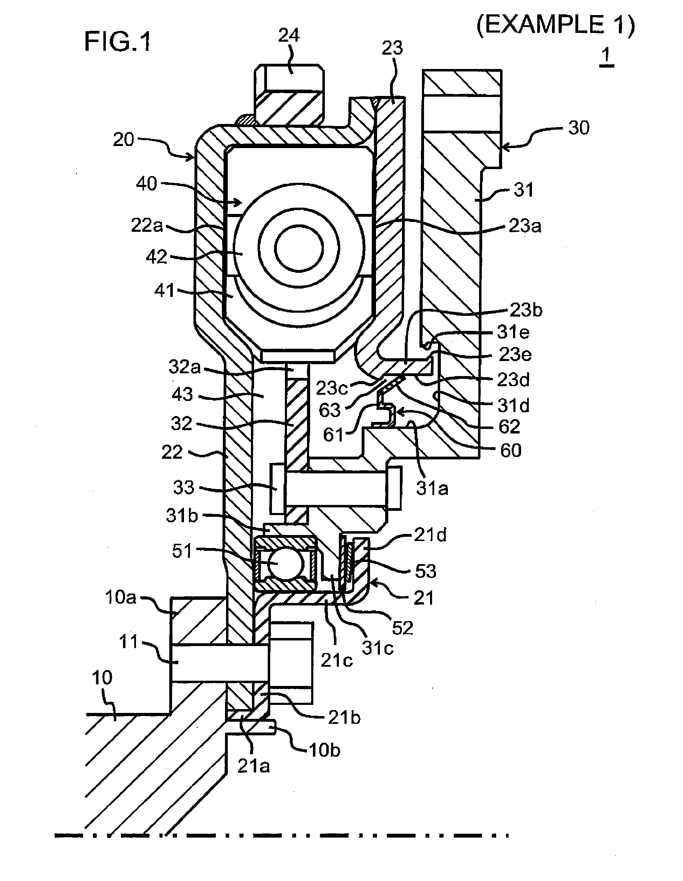

A torque fluctuation absorbing apparatus in accordance with an exemplary embodiment of the present invention includes a rotatably-arranged first rotary member (20 in Fig. 1); a second rotary member (30 in Fig. 1) arranged rotatably relative to the first rotary member; a damper part (40 in Fig. 1) for absorbing fluctuating torque caused by torsion between the first rotary member and the second rotary member, the damper part being stored in an interior space (43 in Fig. 1) surrounded by the first rotary member and the second rotary member; a seal member (60 in Fig. 1) for sealing a clearance between the first rotary member and the second rotary member to seal in a fluid stored in the interior space; and a fluid storing part (63 in Fig. 1) for adjusting entrance/exit of the fluid stored in the interior space and storing the fluid lubricating the seal member.

Reference numerals in figures in this application are added to help understanding, and are not intended to limit constituents to illustrated modes.

Preferably, in the torque fluctuation absorbing apparatus of the present invention, the seal member includes a metal ring secured to the second rotary member, annular buffer that is fixed to the metal ring and is in elastic contact with the first rotary member.

Preferably, in the torque fluctuation absorbing apparatus of the present invention, the seal member includes a secured section secured to the second rotary member, and a tongue section that extends from the secured section and is in elastic contact with the first rotary member.

Preferably, the torque fluctuation absorbing apparatus of the present invention further includes a partitioning section for adjusting entrance/exit of the fluid between the interior space and the fluid storing part.

Preferably, in the torque fluctuation absorbing apparatus of the present invention, the partitioning section is a first convex portion formed in the first rotary member.

Preferably, in the torque fluctuation absorbing apparatus of the present invention, the first convex portion is formed by cutting the seal surface.

Preferably, in the torque fluctuation absorbing apparatus of the present invention, the first convex portion is formed by pressing.

Preferably, in the torque fluctuation absorbing apparatus of the present invention, the partitioning section is a first protruding section formed on the seal member.

Preferably, the torque fluctuation absorbing apparatus of the present invention further includes a plate fixed to one of the first rotary member and the second rotary member, and the partitioning section is the plate.

Preferably, in the torque fluctuation absorbing apparatus of the present invention, the plate is in slide contact with the other of the first rotary member and the second rotary member, and has one or more holes that the fluid enters into and exits from the interior space or the fluid storing part.

Preferably, in the torque fluctuation absorbing apparatus of the present invention, the plate is in slide contact with the other of the first rotary member and the second rotary member, and has one or more slits through which the fluid enters into and exits from the interior space or the fluid storing part.

Preferably, in the torque fluctuation absorbing apparatus of the present invention, the plate is disposed apart from the other of the first rotary member and the second rotary member, and the fluid can enter into and exit from the interior space or the fluid storing part through a clearance between the plate and the other of the first rotary member and the second rotary member.

Preferably, in the torque fluctuation absorbing apparatus of the present invention, the plate is fixed to the first rotary member, and the plate is arranged so as to support a part of the seal member when the part of the seal member leans toward the plate.

Preferably, in the torque fluctuation absorbing apparatus of the present invention, the partitioning section is a second protruding section formed on the second rotary member.

Preferably, in the torque fluctuation absorbing apparatus of the present invention, the first rotary member has a cylindrical portion extending toward the second rotary member in the axial direction on the radially outer side than the seal member, an inner peripheral surface of the cylindrical portion has a seal surface that is flat (straight) in the rotational axis direction, and the seal member is in elastic contact with the seal surface.

Preferably, in the torque fluctuation absorbing apparatus of the present invention, the second rotary member has an annular first concave part recessed from the side of the first rotary member, and the cylindrical portion is inserted so as not to come into contact the first concave part.

Preferably, in the torque fluctuation absorbing apparatus of the present invention, the outer peripheral surface of a front end of the cylindrical portion has a second convex part, a radially outer wall surface of the first concave part has a third convex part, and the second protruding part is arranged at a position closer to the a bottom surface of the first concave part than the third protruding part in the axial direction.

Preferably, in the torque fluctuation absorbing apparatus of the present invention, the cylindrical portion has a flange section extending from a front end in the radially inward direction, and the flange section is arranged between the seal member and the second rotary member in the axial direction.

Preferably, in the torque fluctuation absorbing apparatus of the present invention, the flange section is arranged so as to support a part of the seal member when the part of the seal member leans toward the flange section.

Preferably, in the torque fluctuation absorbing apparatus of the present invention, the second rotary member has a second concave part recessed in the radially inward direction from the flange section, and extends into the second concave part so as not to come into contact with the second concave part.

Preferably, in the torque fluctuation absorbing apparatus of the present invention, the second rotary member has sections that can be coupled to each other in a range of possible axial positions of the second concave part.

Preferably, the torque fluctuation absorbing apparatus of the present invention further includes second plate fixed to the second rotary member, and the seal member is secured to the second rotary member via the second plate.

### Example 1

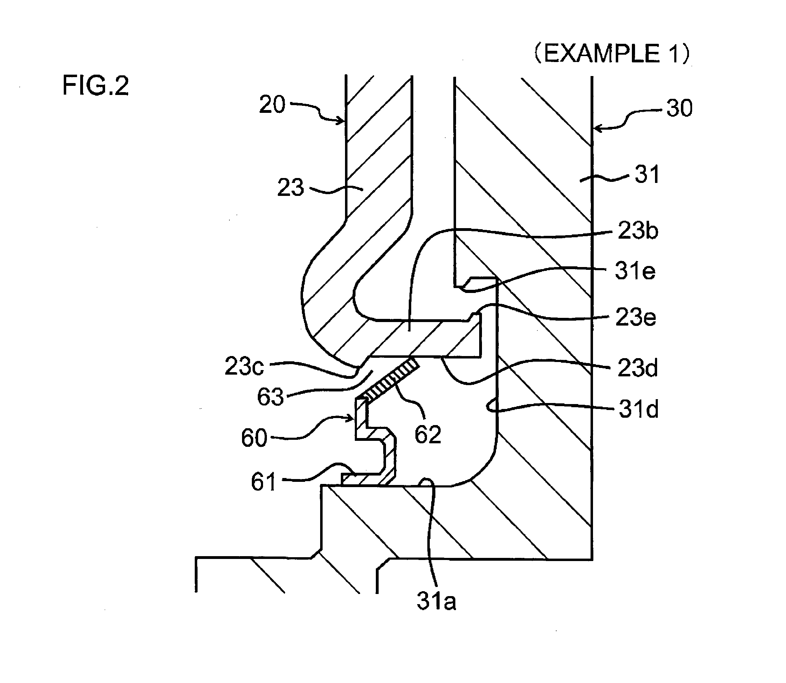

A torque fluctuation absorbing apparatus in accordance with Example 1 of the present invention will be described with reference to figures. Fig. 1 is a radial sectional view schematically showing a structure of a torque fluctuation absorbing apparatus in accordance with Example 1 of the present invention. Fig. 2 is an enlarged sectional view schematically showing a seal structure of the torque fluctuation absorbing apparatus in accordance with Example 1 of the present invention.

The torque fluctuation absorbing apparatus 1 in accordance with Example 1 is an apparatus for absorbing (suppressing) fluctuating torque caused by torsion between a first flywheel 20 and a second flywheel 30. The torque fluctuation absorbing apparatus 1 has a torsion buffering function, and includes a damper part 40 for absorbing the fluctuating torque between the first flywheel 20 and the second flywheel 30 by a spring force. The torque fluctuation absorbing apparatus 1 is provided in a power transmission path between a crank shaft 10 of an engine and a clutch (not shown).

The first flywheel 20 is an annular assembly coupled to the crank shaft 10 of the engine. The first flywheel 20 transmits a rotary motive force of the crank shaft 10 to the damper part 40. The first flywheel 20 accommodates the damper part 40 and lubricating oil (for example, grease), and a clearance between the first flywheel 20 and the second flywheel 30 is sealed with a seal member 60. The first flywheel 20 rotatably bears the second flywheel 30 via a ball bearing 51, and restricts the axial movement of the second flywheel 30 by use of the ball bearing 51, a bush 52, and a annular conical spring 53. The first flywheel 20 has a support member 21, a plate 22, a plate 23, and a ring gear 24 as components.

The support member 21 is an annular member for rotatably supporting the second flywheel 30. The support member 21 together with the plate 22 is fastened to a flange section 10a of the crank shaft 10 with a bolt 11. This allows the support member 21 to rotate integrally with the plate 22. The support member 21 has a cylindrical portion 21a inserted into the outer periphery of a cylindrical portion 10b of the crank shaft 10. The cylindrical portion 21 a is inserted into the inner periphery of the plate 23 [sic. 22], and restricts the radial movement of the plate 23 [sic. 22]. The support member 21 has an annular flange portion 21 b extending from an end of the cylindrical portion 21 a on the clutch side (right side in Fig. 1) in the radially outward direction. The flange portion 21b has a hole(s) for inserting a screw of the bolt 11 thereinto. The flange portion 21b has a cylindrical portion 21c extending from its outer peripheral end toward the clutch side (right side in Fig. 1) in the axial direction. The cylindrical portion 21 c rotatably bears the second flywheel 30 (a cylindrical portion 31b of a plate 31) via the ball bearing 51. The cylindrical portion 21c is securedly press-fitted into the inner periphery of an inner ring of the ball bearing 51. The support member 21 has an annular flange portion 21d extending from an end of the cylindrical portion 21 c on the clutch side (right side in Fig. 1) in the radially outward direction. The flange portion 21d restricts the axial movement of the second flywheel 30 (flange section 31c of the plate 31) via the bush 52 and the annular conical spring 53. The flange section 21 d supports an outer peripheral end of the annular conical spring 53.

The plate 22 is an annular member. An inner circumferential end of the plate 22 is arranged on the outer periphery of the cylindrical portion 21 a of the support member 21. The plate 22 is sandwiched between the flange section 10a of the crank shaft 10 and the flange section 21 b of the support member 21 on its inner periphery, and together with the support member 21, is fastened to the crank shaft 10 with the bolt 11. The plate 22 is separated from an outer ring (lace) of the ball bearing 51. The plate 22 has a bag-like storing (accommodating) part 22a for accommodating seat members 41 and coil springs 42 of the damper part 40 on its radially outer periphery. The storing part 22a can come into and out of contact with the pair of seat members 41 on its both circumferential end surfaces, comes into contact with both of the pair of seat members 41 when the damper part 40 has no torsion, and comes into contact with either of the pair of seat members 41 when the damper part 40 has torsion. The plate 22 is formed so as to cover (or surround) the radially outer side of the damper part 40. The outer peripheral surface of the plate 22 is inserted into the inner side of an annular ring gear 24, and is fixed to the ring gear 24 by welding or the like. The plate 22 is in close contact with the plate 23 at the entire end on the clutch side (right side in Fig. 1), and is fixed to the plate 23 by welding or the like.

The plate 23 is an annular member. The plate 23 is in close contact with the plate 22 on the whole outer periphery, and is fixed to the plate 22 by welding or the like. This allows the plate 23 to rotate integrally with the plate 22, and prevents lubricating oil in the first flywheel 20 from leaking from a bonded portion of the plates 22, 23. The plate 23 has a bag-like storing (accommodating) part 23a for accommodating the seat members 41 and the coil springs 42 of the damper part 40 in its intermediate portion. The storing part 23a can come into and out of contact with the pair of seat members 41 on both circumferential end surfaces, comes into contact with both of the pair of seat members 41 when the damper part 40 has no torsion, and comes into contact with either of the pair of seat members 41 when the damper part 40 has torsion. The plate 23 has a cylindrical portion 23b extending toward the clutch side (right side in Fig. 1) on its .inner periphery.

Referring to Fig. 2, the cylindrical portion 23b is a component on the side of the first flywheel 20, which serves to seal the clearance between the first flywheel 20 and the second flywheel 30. The cylindrical portion 23b extends to the vicinity of a concave part 31 d of the plate 31 so as not to be in contact with the plate 31. The cylindrical part 23b has a seal surface 23d in elastic contact with a buffer 62 of the seal member 60 on its inner peripheral surface. The seal surface 23d is finished as a cylindrical surface that is flat (straight) in the axial direction by cutting(turning). The cylindrical portion 23b has an annular protruding portion 23c protruding in the radially inward direction from the seal surface 23d at a position closer to the engine side (left side in Fig. 2) than the seal surface 23d on the inner peripheral surface. The protruding portion 23c is (act as) a partitioning section for promoting the accumulation of lubricating oil that lubricates the seal member 60 (especially, buffer 62) in a fluid storing part 63 that stores the lubricating oil. The protruding portion 23c protrudes in the radially inward direction from the seal surface 23d by cutting (turning) the seal surface 23d of the cylindrical portion 23b. The height of the protruding portion 23c is adjusted so as to restrict the lubricating oil accumulated in the fluid storing part 63 from going out of the fluid storing part 63, and to allow new lubricating oil to enter into the fluid storing part 63. The cylindrical portion 23b has an annular protruding portion 23e protruding in the radially outward direction from its front end. The protruding portion 23e is formed so as not to come into contact with the plate 31. The protruding portion 23e serves to prevent lubricating oil seal that cannot be sealed with the seal member 60 from dispersing to the outside of the apparatus along the outer peripheral surface of the cylindrical portion 23b. The protruding portion 23e is arranged at a position closer to the clutch side (right side in Fig. 2) in the axial direction than a protruding portion 31e of the concave part 31 d of the plate 31.

The ring gear 24 is a ring-like member having a gear on its outer peripheral surface. The ring gear 24 is arranged on the outer periphery of the plate 22, and is fixed to the plate 22 by welding.

The second flywheel 30 is an annular assembly for transmitting the rotary motive force from the damper part 40 to the clutch (not shown). The second flywheel 30 is rotatably born by first flywheel 20 via the ball bearing 51, and is restricted from axially moving relative to the first flywheel 20 by the ball bearing 51, the bush 52, and the annular conical spring 53. The clearance between the second flywheel 30 and the first flywheel 20 is sealed with the seal member 60. The second flywheel 30 has the plate 31, a plate 32, and a rivet(s) 33 as components.

The plate 31 is an annular member. The plate 31 is coupled to the clutch (not shown) on its outer periphery with a bolt or the like. The plate 31 has a seal surface 31a for the seal member 60, which is in pressure contact with the inner peripheral surface of a metal ring 61 on the radially inner side than the cylindrical portion 23b of the plate 23. The seal surface 31a is a cylindrical surface that is flat (straight) in the axial direction, and the metal ring 61 is press-fitted onto the seal surface 31a. The plate 31 has the annular concave part 31d recessed toward the clutch side (right side in Fig. 2) in the axial direction at a position closer to the clutch side (right side in Fig. 2) in the axial direction than the seal surface 31a and on the radially outer side thereof. A front end of the cylindrical portion 23b of the plate 23 is inserted into the concave part 31d so as not to come into contact with the concave part 31d. The concave part 31d has the protruding portion 31e protruding in the radially inward direction on the engine side (left side in Fig. 2) in the axial direction on the wall surface of the radially outer side. The convex part 31e is formed so as not to come into contact with the plate 23. When lubricating oil that cannot be sealed with the seal member 60 exits from the cylindrical portion 23b and is received by the concave part 31d, the protruding portion 31e serves to prevent the received lubricating oil from exiting from the concave part 31d (from going out of the apparatus).

The plate 31 is coupled to plate 32 with the rivet(s) 33 on the radially inner side than the seal surface 31a. Thereby, the plate 31 rotates integrally with the plate 32. The plate 31 has the cylindrical portion 31b extending toward the engine side (left side in Fig. 1) in the axial direction on the radially inner side than the rivet 33. The cylindrical section 31b is rotatably supported by the cylindrical portion 21 c of the support member 21 via the ball bearing 51. The inner peripheral surface of the cylindrical portion 31b is press-fitted onto the outer ring of the ball bearing 51. The plate 31 has the annular flange section 31c extending in the radially inward direction from the radially inner side than the rivet 33. The flange section 31c is arranged between the ball bearing 51 and the bush 52, and is formed so as not to come into contact with the inner ring of the ball bearing 51. The flange section 31 c is biased from the bush 52 toward the ball bearing 51 by the annular conical spring 53.

The plate 32 is an annular member. The plate 32 is arranged on the outer periphery of the cylindrical portion 31b of the plate 31. The plate 32 is coupled to the plate 31 on the inner periphery with the rivet(s) 33. This allows the plate 32 to rotate integrally with the plate 31. The plate 32 has the notched window(s) 32a for storing the coil springs 42 and the seat members 41 of the damper part 40 on its outer periphery. The window 32a can come into and out of contact with the pair of seat members 41 on both circumferential end surfaces, coming into contact with the pair of seat members 41 when the damper part 40 has no torsion, and coming into contact with one of the pair of seat members 41 when the damper part 40 has torsion.

The rivet 33 is a member for coupling the plate 31 to the plate 32.

A rotary motive force of the rotation shaft on the engine side is inputted to the damper part 40, and the inputted rotary motive force is outputted toward rotation shaft of the motor generator. A plurality of coil springs 42 are arranged on one circumference for the damper part(s) 40 at regular intervals. The damper part 40 has the coil spring(s) 42 and the seat members 41 as components.

The seat members 41 are accommodated in the storing (accommodating) parts 22a, 23a of the plates 22, 23 and the window(s) 32a of the plate 32, and are arranged between circumferential end surfaces of the storing parts 22a, 23a and the window 32a, and ends of the coil springs 42. The seat members 41 can be made of resin to reduce wear of the coil springs 42.

The coil springs 42 are accommodated in the storing parts 22a, 23a of the plates 22, 23 and the window 32a of the plate 32, and are in contact with the pair of seat members 41 arranged at both ends. The coil springs 42 contract when the damper part 40 has torsion (torsion between the plates 22, 23 and the plate 32) to absorb shock caused by a rotational difference between the plates 22, 23 and the plate 32.

The ball bearing 51 is an annular bearing member for allowing the support member 21 to rotatably support the plate 31. The ball bearing 51 has a plurality of balls between the outer ring(lace) and the inner ring(lace). The outer ring is press-fitted onto the inner periphery of the cylindrical portion 31b of the plate 31. The inner ring is press-fitted onto the outer periphery of the cylindrical portion 21c of the support member 21.

The bush 52 is an annular member for restricting the axial movement of the plate 31. The bush 52 is arranged between the flange section 31c of the plate 31 and the flange portion 21d of the support member 21. The bush 52 is biased from the side of the flange portion 21 d of the support member 21 by the annular conical spring 53, and is slidably in press contact with the flange section 31c of the plate 31. The bush 52 also has a function of generating hysteresis between the first flywheel 20 and the second flywheel 30.

The annular conical spring 53 is a disc-like spring (Bellville spring) that is arranged between the flange portion 21d of the support member 21 and the bush 52, and biases the flange portion 31 c of the plate 31 toward the ball bearing 51 via the bush 52.

The seal member 60 is an annular member for sealing the clearance between the first flywheel 20 and the second flywheel 30. The seal member 60 is formed of the metal ring 61 and the buffer 62. The metal ring 61 is an annular member formed onto a predetermined shape by pressing. The metal ring 61 is press-fitted onto the outer periphery of the seal surface 31a of the plate 31. Thereby, the metal ring 61 is secured to a predetermined position of the seal surface 31a of the plate 31. The buffer 62 is fixed to an end of the metal ring 61 on the radially outer side, and annularly extends on the radially outer side. The buffer 62 is made of, for example, elastically-deformable rubber or resin. The outer peripheral end of the buffer 62 is in elastic contact with the seal surface 23d of the plate 23. The buffer 62 is lubricated by lubricating oil accumulated in the fluid storing part 63 on the closer side to the seal surface 23d than the protruding portion 23c of the plate 23.

The fluid storing part 63 is a space (recess) for storing the lubricating oil (fluid) stored in the inside of the apparatus such that the lubricating oil can freely enter/exit. The fluid storing part 63 stores the lubricating oil that lubricates the seal member 60 (especially, the buffer 62), and is arranged adjacent to the seal member 60. The fluid storing part 63 is partially surrounded by cylindrical portion 23b, the protruding portion 23c, and the seal surface 23d of the plate 23, and the seal member 60 (mainly, the buffer 62). The lubricating oil in the inside of the apparatus (in the space except for the fluid storing part 63) enters into and exits from the fluid storing part 63 through the annular clearance between the protruding portion 23c and the seal member 60.

In Example 1, since the fluid storing part 63 is partially surrounded by the seal surface 23d of the cylindrical portion 23b of the plate 23 and the seal member 60 (mainly, buffer 62) is partially partitioned by the protruding portion 23c of the cylindrical portion 23b of the plate 23, the lubricating oil is easily accumulated in the fluid storing part 63, and the lubricating oil accumulated in the fluid storing part 63 lubricates the buffer 62 of the seal member 60, preventing wear of the seal member 60 ascribable to lack in the lubricating oil.

In Example 1, since the seal member 60 is mounted (disposed) in the clearance between the plate 23 of the first flywheel 20 and the plate 31 of the second flywheel 30, foreign materials (for example, water, muddy water, and dust) can be prevented from entering into the inside of the apparatus.

In Example 1, since the concave part 31d and the protruding part 31e are formed in the plate 30, when the lubricating oil that cannot be sealed with the seal member 60 exits from the cylindrical portion 23b and is received by the concave part 31d, the received lubricating oil can be confined within the concave part 31d (does not exit to the outside of the apparatus).

### Example 2

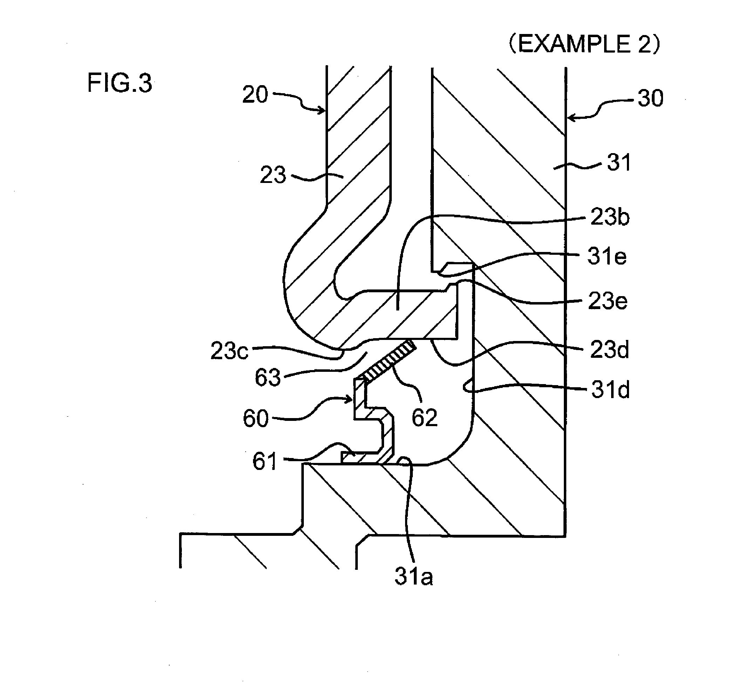

A torque fluctuation absorbing apparatus in accordance with Example 2 of the present invention will be described with reference to figures. Fig. 3 is an enlarged sectional view schematically showing a seal structure of the torque fluctuation absorbing apparatus in accordance with Example 2 of the present invention.

Example 2 is a modification (variant) example of Example 1, to partition the fluid storing part 63, the protruding portion 23c is formed by pressing without cutting (turning) the seal surface 23d of the cylindrical portion 23b in the plate 23.

The seal surface 23d is a cylindrical surface that is flat (straight) in the axial direction, which is formed by pressing. The protruding portion 23c is formed by pressing the plate 23 so as to protrude in the radially inward direction from the seal surface 23d.

Other configuration is the same as that in Example 1.

Example 2 achieves the same effects as Example 1, and since the seal surface 23d and the protruding portion 23c of the cylindrical portion 23b of the plate 23 are formed by pressing, manufacturing costs of the plate 23 can be reduced.

### Example 3

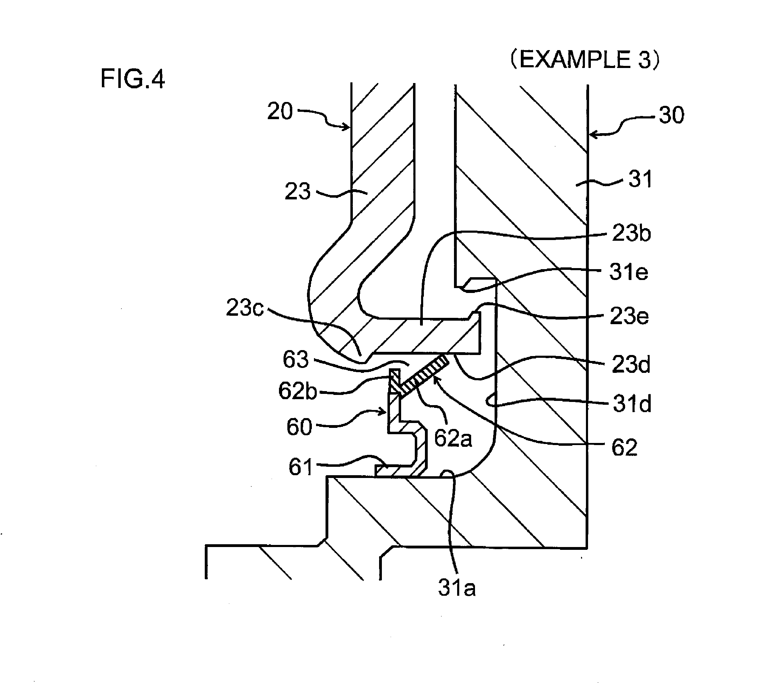

A torque fluctuation absorbing apparatus in accordance with Example 3 of the present invention will be described with reference to figures. Fig. 4 is an enlarged sectional view schematically showing a seal structure of the torque fluctuation absorbing apparatus in accordance with Example 3 of the present invention.

Example 3 is a modification example of Example 1, and to partition the fluid storing part 63, the protruding portion 23c is provided in the cylindrical portion 23b of the plate 23 and further, a protruding section 62b is formed on the buffer 62 of the seal member 60.

The buffer 62 is an annular portion that is fixed to a radially outer end of the metal ring 61, and extends in the radially outward direction. The buffer 62 is made of, for example, elastically-deformable rubber or resin. The buffer 62 has an annular tongue section 62a in elastic contact with seal surface 23d of the plate 23 at its outer peripheral end. The tongue section 62a is lubricated by the lubricating oil accumulated in the fluid storing part 63. The buffer 62 has the protruding section 62b arranged on the inner side of the apparatus (right [sic. left] side in Fig. 4) than the tongue section 62a. The protruding section 62b functions as a partition for promoting the accumulation of the lubricating oil lubricating the seal member 60

(especially, buffer 62) in the fluid storing part 63 that stores the lubricating oil. The height of the protruding section 62b is adjusted so as to restrict the lubricating oil accumulated in the fluid storing part 63 from going out of the fluid storing part 63, and allow new lubricating oil to enter into the fluid storing part 63. The lubricating oil in the inside of the apparatus (in the space within the apparatus except for the fluid storing part 63) enters and exits from the fluid storing part 63 through the annular clearance between the protruding section 62b and the cylindrical portion 23b. Although the protruding section 62b as the partition for the fluid storing part 63 is provided on the buffer 62 in Fig. 4, a protruding section may be provided in the metal ring 61. The protruding section 62b may be in elastic contact with the seal surface 23d of the plate 23.

Other configuration is the same as that in Example 1.

Example 3 achieves the same effects as Example 1, and since the fluid storing part 63 partially surrounded by the seal surface 23d of the cylindrical portion 23b of the plate 23 and the tongue section 62a of the buffer 62 of the seal member 60 is partially surrounded by the protruding section 62b of the buffer 62, lubricating oil is easily accumulated in the fluid storing part 63, and the lubricating oil accumulated in the fluid storing part 63 lubricates the tongue section 62a of the buffer 62 in the seal member 60, suppressing the wear of the seal member 60 ascribable to lack in lubricating oil.

### [Example 4]

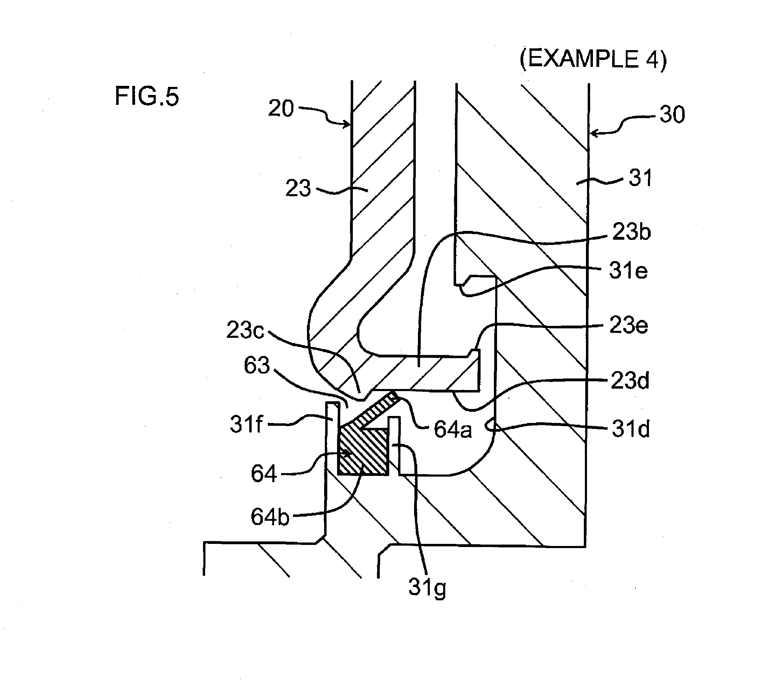

A torque fluctuation absorbing apparatus in accordance with Example 4 of the present invention will be described with reference to figures. Fig. 5 is an enlarged sectional view schematically showing a seal structure of the torque fluctuation absorbing apparatus in accordance with Example 4 of the present invention.

Example 4 is a modification example of Example 1, and to partition the fluid storing part 63, the protruding portion 23c is provided on the cylindrical portion 23b of the plate 23, and a protruding section 31f is further provided on the plate 31. Further, in place of using the seal member (60 in Fig. 3) having the metal ring (61 in Fig. 3), a seal member 64 formed of only a buffer is used.

The plate 31 has annular protruding sections 31f, 31g protruding in the radially outward direction on the cylindrical surface (corresponding to the seal surface 31a in Fig. 3) on the radially inner side than the cylindrical portion 23b of the plate 23. The protruding sections 31f, 31g are formed so as not to be in contact with the cylindrical portion 23b of the plate 23. The protruding section 31f is arranged on the inner side of the apparatus (left side in Fig. 5) than the protruding section 31g. The protruding section 31f functions as a partition for promoting the accumulation of lubricating oil lubricating the seal member 64 (especially, a tongue section 64a) in the fluid storing part 63. The height of the protruding section 31f is adjusted so as to restrict the lubricating oil accumulated in the fluid storing part 63 from going out of the fluid storing part 63, and allow new lubricating oil to enter the fluid storing part 63. The lubricating oil in the inside of the apparatus (in the space within the apparatus except for the fluid storing part 63) flows into and exits from the fluid storing part 63 through the annular clearance between the protruding section 31f and the cylindrical portion 23b. The seal member 64 is mounted in an annular groove formed between the protruding section 31f and the protruding section 31 g.

The seal member 64 is an annular member for sealing the clearance between the first flywheel 20 and the second flywheel 30. The seal member 64 is formed of only the buffer, and is made of, for example, elastically-deformable rubber or resin. The seal member 64 has the annular tongue section 64a extending in the radially outward direction from a secured (fixed) section 64b fixedly mounted to the annular groove formed between the protruding section 31f and the protruding section 31 g. The tongue section 64a is in elastic contact with the seal surface 23d of the plate 23 at its outer peripheral end. The tongue section 64a is lubricated by lubricating oil accumulated in the fluid storing part 63 on the side closer to the seal surface 23d than the protruding portion 23c of the plate 23.

Other configuration is the same as that in Example 1.

Example 4 achieves the same effects as Example 1, and since the fluid storing part 63 partially surrounded by the seal surface 23d of the cylindrical portion 23b of the plate 23 and the tongue section 64a of the seal member 64 is partially partitioned by the protruding section 31f of the plate 31, lubricating oil is easily accumulated in the fluid storing part 63, and the lubricating oil accumulated in the fluid storing part 63 lubricates the tongue section 64a of the seal member 64, suppressing the wear of the seal member 64 ascribalbe to lack in lubricating oil.

### Example 5

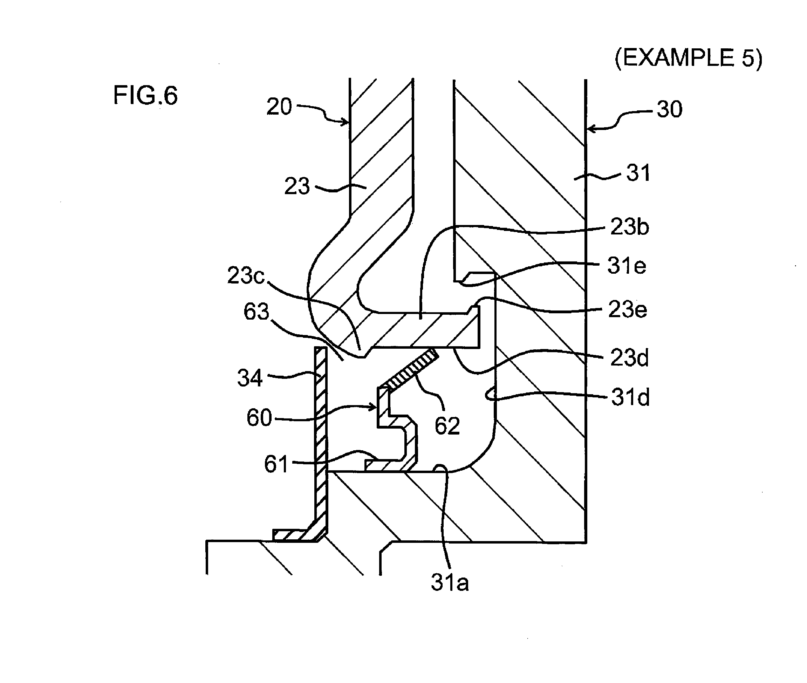

A torque fluctuation absorbing apparatus in accordance with Example 5 of the present invention will be described with reference to figures. Fig. 6 is an enlarged sectional view schematically showing a seal structure of the torque fluctuation absorbing apparatus in accordance with Example 5 of the present invention.

Example 5 is a modification example of Example 1, and to partition of the fluid storing part 63, the protruding portion 23c is provided on the cylindrical portion 23b of the plate 23 and further, a plate 34 is provided.

The plate 34 is an annular member. The plate 34 is fixedly attached to (press-fitted onto or welded to) the outer periphery of the cylindrical surface formed on the inner side of the apparatus (left side in Fig. 6) than the seal surface 31a of the plate 31 and on the radially inner side. The plate 34 is formed so as not to be in contact with the cylindrical portion 23b of the plate 23. The plate 34 functions as a partition for promoting the accumulation of lubricating oil lubricating the seal member 60 (especially, buffer 62) in the fluid storing part 63 that stores the lubricating oil. The radial length of the plate 34 is adjusted so as to restrict the lubricating oil accumulated in the fluid storing part 63 from going out of the fluid storing part 63, and allow new lubricating oil to flow into the fluid storing part 63. The lubricating oil in the apparatus (in the space within the apparatus except for the fluid storing part 63) flows into and exits from the fluid storing part 63 through annular clearance between the plate 34 and the cylindrical portion 23b. Although the plate 34 as the partition for the fluid storing part 63 is fixedly mounted to the plate 31 in Fig. 6, the plate 34 may be fixedly mounted to the plate 23.

Other configuration is the same as that in Example 1.

Example 5 achieves the same effects as Example 1, and since the fluid storing part 63 partially surrounded by the seal surface 23d of the cylindrical portion 23b of the plate 23 and the buffer 62 of the seal member 60 is partially partitioned by the plate 34, lubricating oil is easily accumulated in the fluid storing part 63, and the lubricating oil accumulated in the fluid storing part 63 lubricates the buffer 62 of the seal member 60, suppressing the wear of the seal member 60 ascribable to lack in lubricating oil.

### Example 6

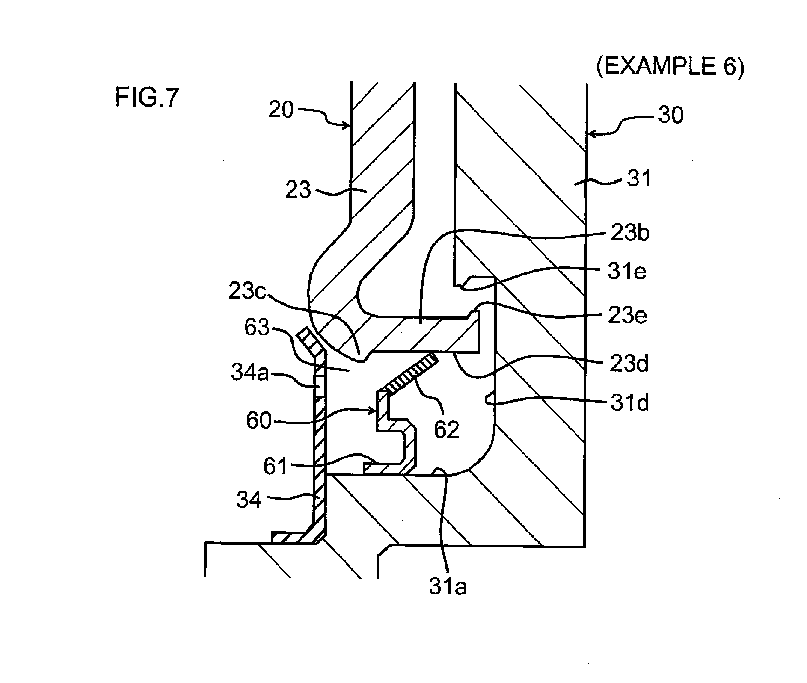

A torque fluctuation absorbing apparatus in accordance with Example 6 of the present invention will be described with reference to figures. Fig. 7 is an enlarged sectional view schematically showing a seal structure of the torque fluctuation absorbing apparatus in accordance with Example 6 of the present invention.

Example 6 is a modification example of Example 5, and to partition the fluid storing part 63, the plate 34 is provided with one or more holes 34a that lubricating oil in the inside of the apparatus (in the space within the apparatus except for the fluid storing part 63) flows into and exits from the fluid storing part 63. The number and size of the holes 34a are adjusted so as to restrict the lubricating oil accumulated in the fluid storing part 63 from going out of the fluid storing part 63, and allow new lubricating oil to flow into the fluid storing part 63. The plate 34 is formed so as not to be in contact with the plate 23 (cylindrical portion 23b) at its outer peripheral end. Other configuration is the same as that in Example 5.

Example 6 achieves the same effects as Example 5.

### Example 7

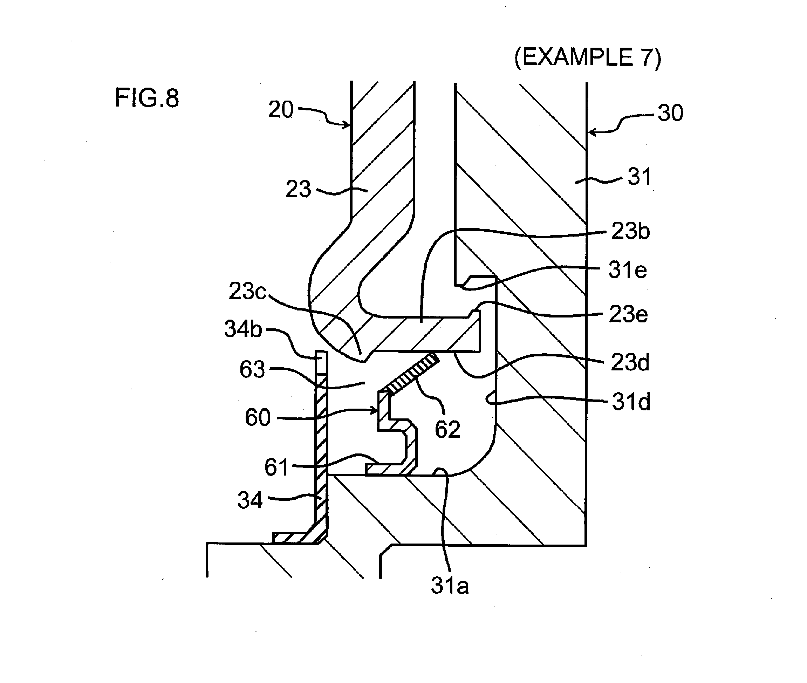

A torque fluctuation absorbing apparatus in accordance with Example 7 of the present invention will be described with reference to figures. Fig. 8 is an enlarged sectional view schematically showing a seal structure of the torque fluctuation absorbing apparatus in accordance with Example 7 of the present invention.

Example 7 is a modification example of Example 6, and as entrances/exits of the lubricating oil for the fluid storing part 63, in place of providing the holes (34a in Fig. 7) in the plate 34, one or more slits 34b (or notches) are provided in the plate 34. The slits 34b are formed on the radially outer side than the holes 34a. Other configuration is the same as that in Example 6.

Example 7 achieves the same effects as Example 6.

### Example 8

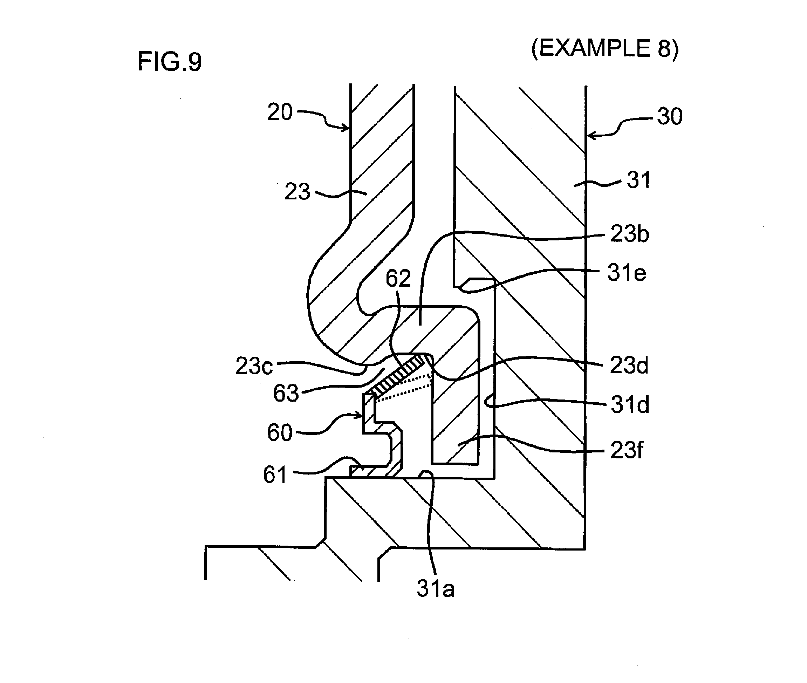

A torque fluctuation absorbing apparatus in accordance with Example 8 of the present invention will be described with reference to figures. Fig. 9 is an enlarged sectional view schematically showing a seal structure of the torque fluctuation absorbing apparatus in accordance with Example 8 of the present invention.

Example 8 is a modification example of Example 2, and the plate 23 is provided with a flange section 23f for supporting (backing up) leaning(tilting)-down of the buffer 62 of the seal member 60 in the plate 23 such that lubricating oil does not leak to the outside even when the lubricating oil is swiftly fed into the fluid storing part 63 from the inside of the apparatus.

The flange section 23f is an annular portion extending in the radially inward direction from a front end (front end on the side of the plate 31) of the cylindrical portion 23b of the plate 23. The flange section 23f is formed so as not to be in contact with the seal surface 31 a of the plate 31. The flange section 23f can support against leaning-down of the buffer 62 as well as prevent any lubricating oil that cannot be sealed with the seal member 60 and leaks outwards from further extending to the outside of the apparatus. That is, while the apparatus is rotating, the lubricating oil leaking to the outside of the seal member 60 is collected around the cylindrical portion 23b of the plate 23 by centrifugal force and thus, the flange section 23f prevents the leakage of the lubricating oil to the outside of the apparatus. Although the plate 23 has no protruding part (corresponding to 23e in Fig. 3) in Fig. 9, the protruding part may be provided.

Other configuration is the same as that in Example 2.

Example 8 achieves the same effects as Example 2, and by providing the flange section 23f in the plate 23, even when the buffer 62 of the seal member 60 tilts down, the buffer 62 is supported by the flange section 23f, preventing the outflow of the lubricating oil. Moreover, should the lubricating oil leak from the seal member 60 to the outer side, the leaked oil is blocked by the flange section 23f to prevent the leakage of the lubricating oil to the outside of the apparatus.

### Example 9

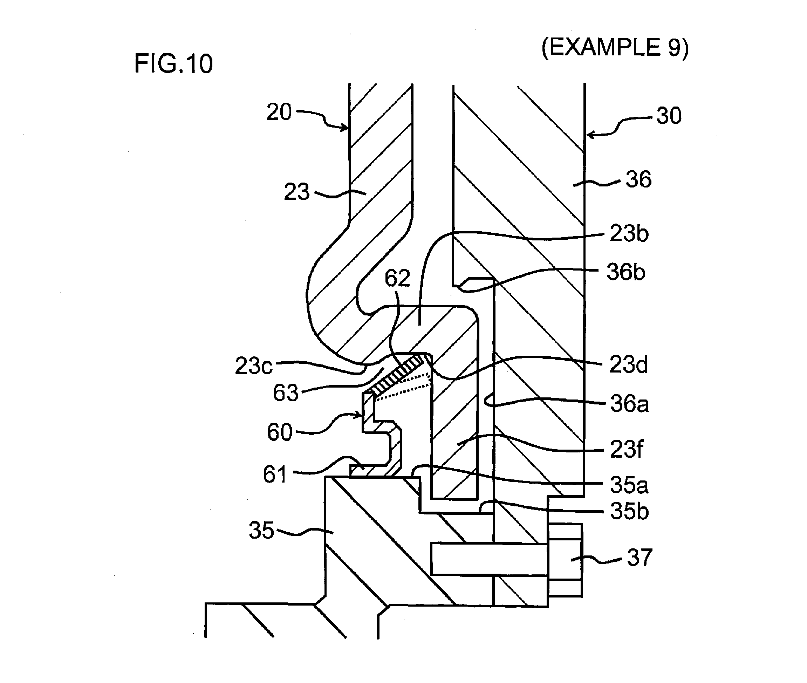

A torque fluctuation absorbing apparatus in accordance with Example 9 of the present invention will be described with reference to figures. Fig. 10 is an enlarged sectional view schematically showing a seal structure of the torque fluctuation absorbing apparatus in accordance with Example 9 of the present invention.

Example 9 is a modification example of Example 8, and the plate (corresponding to 31 in Fig. 9) in Example 8 is divided into a hub member 35 and a plate 36, the hub member 35 and the plate 36 can be coupled to each other with a bolt(s) 37, the hub member 35 has a concave part 35b, and the flange section 23f of the plate 23 extends into the concave part 35b (to the radially inner side than a seal surface 35a of the hub member 35). A concave part like the concave part 35b may be formed in the plate 36. The location where the plate is divided into the hub member 35 and the plate 36 only needs to fall within the range of the possible axial positions of the concave part 35b. The plate (corresponding to 31 in Fig. 9) is divided into the hub member 35 and the plate 36 in order to enable assemblement of the flange section 23f so as to be inserted into the concave part 35b.

The hub member 35 is an annular member formed in a predetermined shape. The hub member 35 has a seal surface 35a in pressure contact with the inner peripheral surface of the metal ring 61 of the seal member 60 on the radially inner side than the cylindrical portion 23b of the plate 23. The seal surface 35a is a cylindrical surface that is flat in the axial direction, and the metal ring 61 is press-fitted onto the seal surface 35a. The hub member 35 has the step-like concave part 35b recessed in the radially inward direction from the seal surface 35a at a position closer to the clutch side in the axial direction (right side in Fig. 10) than the seal surface 35a. The flange section 23f of the plate 23 is inserted into the concave part 35b so as not to be in contact with the concave part 35b. The hub member 35 is coupled to the plate (corresponding to 32 in Fig. 1) with the rivet(s) (corresponding to 33 in Fig. 1) on the radially inner side than the seal surface 35a. Thereby, the hub member 35 rotates integrally with the plate (corresponding to 32 in Fig. 1). The hub member 35 has the cylindrical portion (corresponding to 31b in Fig. 1) extending toward the engine side in the axial direction (left side in Fig. 1) on the radially inner side than the rivet (corresponding to 33 in Fig. 1). The cylindrical portion (corresponding to 31b in Fig. 1) is rotatably supported by the cylindrical portion (corresponding to 21 in Fig. 1) of the support member (corresponding to 21 c in Fig. 1) via the ball bearing (corresponding to 51 in Fig. 1). The cylindrical section (corresponding to 31b in Fig. 1) is press-fitted onto the outer ring (lace) of the ball bearing (corresponding to 51 in Fig. 1) on its inner peripheral surface. The hub member 35 has the annular flange section (corresponding to 31c in Fig. 1) extending in the radially inward direction from a position on the radially inner side than the rivet (corresponding to 33 in Fig. 1). The flange section (corresponding to 31c in Fig. 1) is arranged between the ball bearing (corresponding to 51 in Fig. 1) and the bush (corresponding to 52 in Fig. 1), and is formed so as not to be in contact with the inner ring of the ball bearing (corresponding to 51 in Fig. 1). The flange section (corresponding to 31 c in Fig. 1) is biased from the bush (corresponding to 52 in Fig. 1) toward the ball bearing (corresponding to 51 in Fig. 1) by the annular conical spring (corresponding to 53 in Fig. 1).

The plate 36 is an annular member. The plate 36 is coupled to the clutch (not shown) on its outer periphery with a bolt(s) or the like. The plate 36 is coupled to the hub member 35 on its inner periphery with the bolt(s) 37. The plate 36 has a step-like annular concave part 36a recessed toward the axial clutch side (right side in Fig. 2) at a position closer to the axial clutch side (right side in Fig. 10) than the seal surface 35a of the hub member 35. The cylindrical portion 23b and the flange section 23f of the plate 23 are inserted into the concave part 36a so as not to be in contact with the concave section 36a. The concave part 36a has a protruding part 36b protruding in the radially inward direction on the axial engine side (left side in Fig. 2) of the wall surface on the radially outer side. The protruding part 36b is formed so as not to be in contact with the plate 23. When leaked lubricating oil, which cannot be blocked by the flange section 23f of the plate 23, is received by the concave part 36a, the protruding part 36b serves to confine the received lubricating oil in the concave part 36a (prevent the received lubricating oil from going to the outside of the apparatus).

Other configuration is the same as that in Example 8.

Example 9 achieves the same effects as Example 8, and achieves more effective prevention of leakage of the lubricating oil by the flange section 23f than in Example 8.

### Example 10

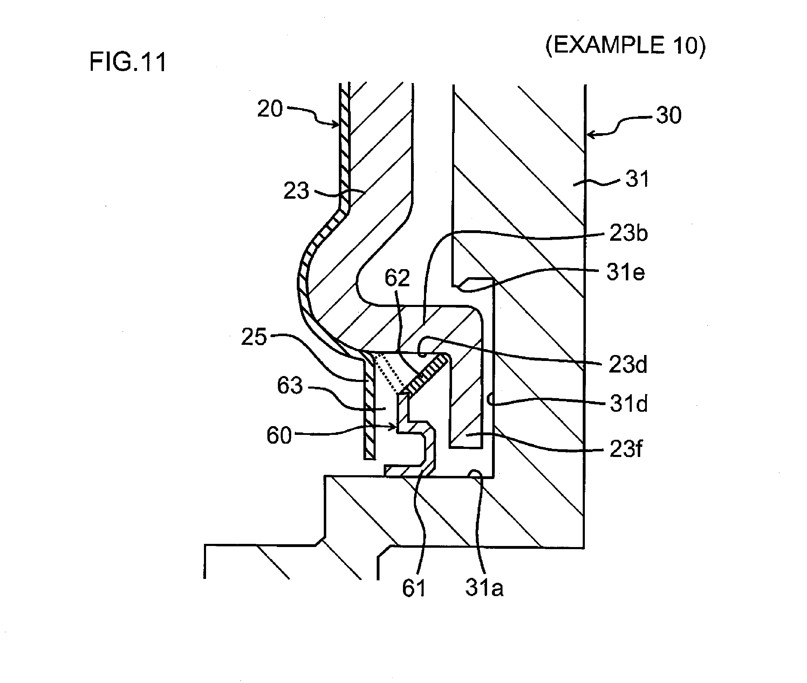

A torque fluctuation absorbing apparatus in accordance with Example 10 of the present invention will be described with reference to figures. Fig. 11 is an enlarged sectional view schematically showing a seal structure of the torque fluctuation absorbing apparatus in accordance with Example 10 of the present invention.

Example 10 is a modification example of Example 8, and there is provided a plate 25 for supporting (backing up) against tilting-down of the buffer 62 of the seal member 60 such that, even when foreign materials swiftly flow into the apparatus (fluid storing part 63) from the outside, the foreign materials do not invade into the inside of the apparatus. Further, to partition of the fluid storing part 63, the plate 25 is used in place of the protruding portion (23c in Fig. 10) of the cylindrical portion 23b of the plate 23.

The plate 25 is an annular member. The plate 25 is fixedly attached (riveted or welded) to the inner side of the plate 23. The plate 25 extends on the radially inner side than the cylindrical portion 23b of the plate 23, and is formed so as not to be in contact with the seal surface 31 a of the plate 31. The plate 25 functions as a partition for promoting the accumulation of lubricating oil lubricating the seal member 60 (especially, buffer 62) in the fluid storing part 63 that stores the lubricating oil. The radial length of the plate 25 is adjusted so as to restrict the lubricating oil accumulated in the fluid storing part 63 from going out of the fluid storing part 63, and allow new lubricating oil to flow into the fluid storing part 63. The lubricating oil in the inside of the apparatus (in the space within the apparatus except for the fluid storing part 63) flows into and exits from the fluid storing part 63 through the annular clearance between the plate 25 and the seal surface 31a. The plate 25 functions as the partition for the fluid storing part 63, as well as supports against tilting-down of the buffer 62 of the seal member 60 toward the inside of the apparatus.

Other configuration is the same as that in Example 8.

Example 10 achieves the same effects as Example 8, and even when the buffer 62 of the seal member 60 tilts down, the plate 25 can support the buffer 62, preventing external foreign materials from invading into the apparatus.

### Example 11

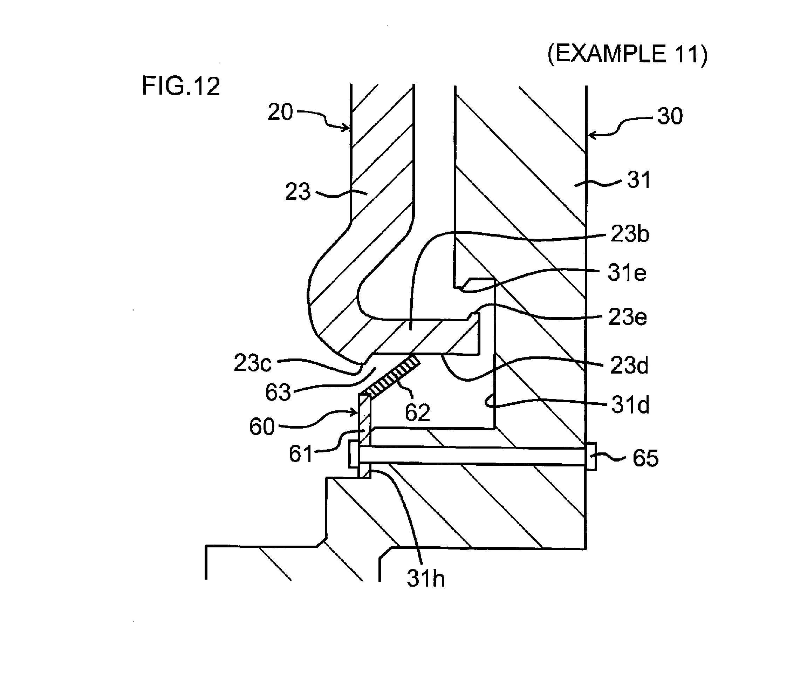

A torque fluctuation absorbing apparatus in accordance with Example 11 of the present invention will be described with reference to figures. Fig. 12 is an enlarged sectional view schematically showing a seal structure of the torque fluctuation absorbing apparatus in accordance with Example 11 of the present invention.

Example 11 is a modification example of Example 1, and to fix the seal member 60, rather than press-fitting the metal ring 61 of the seal member 60 into the outer periphery of the seal surface (31a in Fig. 2) of the plate 31, the metal ring 61 is coupled to the plate 31 with a rivet(s) 65 (or a coupling member such as a spring). The plate 31 has a stepped section 31h for positioning the metal ring 61. The seal member 60 may be fixed by directly welding the metal ring 61 to the plate 31 without using the rivet 65. Other configuration is the same as that in Example 1.

Example 11 achieves the same effects as Example 1, and even when the metal ring 61 of the seal member 60 is not press-fitted onto the plate 31, the metal ring 61 can be fixedly coupled to the plate 31 with the coupling member such as the rivet 65, increasing yields of the seal member 60.

### Example 12

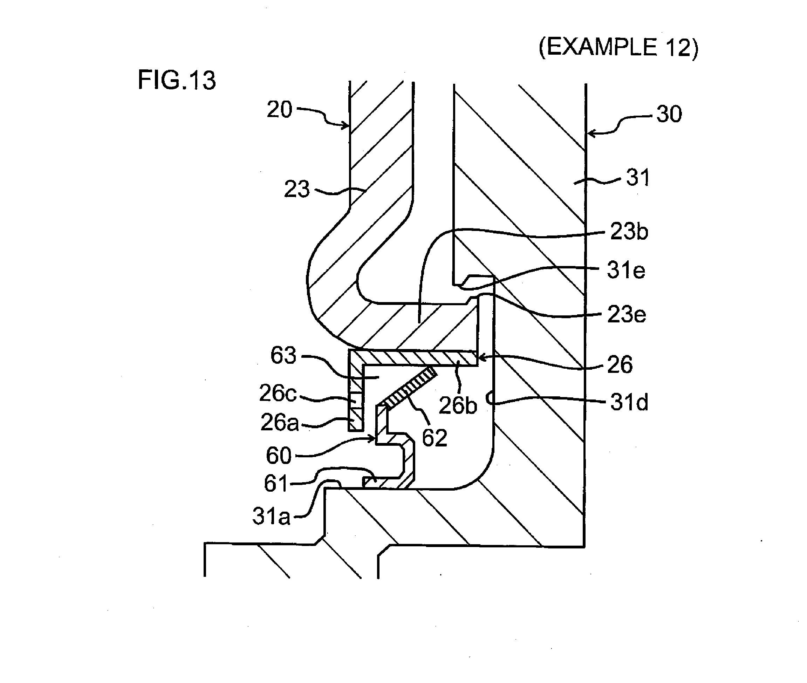

A torque fluctuation absorbing apparatus in accordance with Example 12 of the present invention will be described with reference to figures. Fig. 13 is an enlarged sectional view schematically showing a seal structure of the torque fluctuation absorbing apparatus in accordance with Example 12 of the present invention.

Example 12 is a modification example of Example 1, and to partition of the fluid storing part 63, a plate 26 is press-fitted into the inner periphery of the cylindrical portion 23b without providing the protruding part (23c in Fig. 2) on the cylindrical portion 23b of the plate 23. A stepped section (corresponding to 3 1 h in Fig. 12) for positioning the metal ring 61 of the seal member 60 may be formed on the plate 31. Other configuration is the same as that in Example 1.

The plate 26 is a plate having an annular flange section 26a extending in the radially inward direction from an end of a tube-like cylindrical portion 26b on the engine side (left side in Fig. 13). The cylindrical portion 26b is press-fitted to the inner periphery of the cylindrical portion 23b. The cylindrical portion 26b is a seal surface in elastic contact with the buffer 62 of the seal member 60 on its inner peripheral surface. The flange section 26a functions as a partition for promoting the accumulation of lubricating oil lubricating the seal member 60 (especially, buffer 62) in the fluid storing part 63 that stores the lubricating oil. The radial length of the flange section 26a is adjusted so as to restrict the lubricating oil accumulated in the fluid storing part 63 from going out of the fluid storing part 63 and allow new lubricating oil to flow into the fluid storing part 63. As needed, the flange section 26a may have one or more holes 26c so that the lubricating oil in the inside of the apparatus (in the space within the apparatus except for the fluid storing part 63) flows into and exits from the fluid storing part 63.

Example 12 achieves the same effects as Example 1.

### Example 13

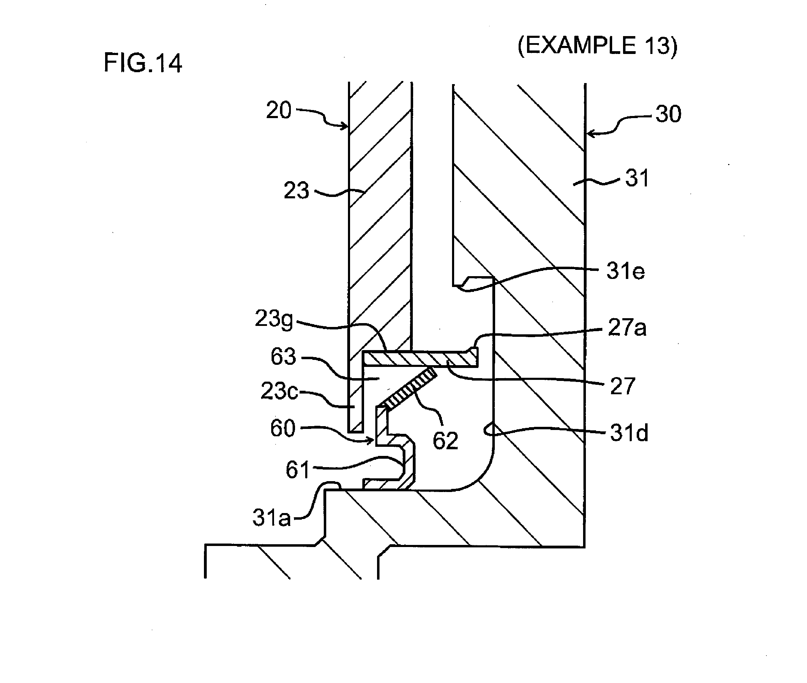

A torque fluctuation absorbing apparatus in accordance with Example 13 of the present invention will be described with reference to figures. Fig. 14 is an enlarged sectional view schematically showing a seal structure of the torque fluctuation absorbing apparatus in accordance with Example 13 of the present invention.

Example 13 is a modification example of Example 1, and without providing the cylindrical portion (23b in Fig. 2) in the plate 23, the annular protruding part 23c is provided at the inner circumferential end of the plate 23, a stepped section 23g that is a cylindrical surface is provided, and a cylindrical member 27 is press-fitted to the inner periphery of the stepped section 23g. A stepped section (corresponding to 31h in Fig. 12) for positioning the metal ring 61 of the seal member 60 may be formed on the plate 31. Other configuration is the same as that in Example 1.

The cylindrical member 27 is a component on the side of the first flywheel 20, which seals the clearance between the first flywheel 20 and the second flywheel 30. The cylindrical member 27 extends to the vicinity of the concave part 31 d of the plate 31 so as not to be in contact with the plate 31. The cylindrical member 27 has a seal surface in elastic contact with the buffer 62 of the seal member 60 on its inner peripheral surface. The seal surface is a cylindrical surface that is flat in the axial direction. The cylindrical member 27 is in contact with a side wall surface of the protruding part 23c at an end on the engine side (left side in Fig. 14). The cylindrical member 27 has an annular protruding part 27e [sic.27a] protruding from a front end in the radially outward direction. The protruding part 27a is formed so as not to be in contact with the plate 31. The protruding part 27a serves to prevent lubricating oil that cannot be sealed by the seal member 60 from moving along the outer peripheral surface of the cylindrical member 27 and scattering to the outside of the apparatus. The protruding part 27e is arranged at a position closer to the axial clutch side (right side in Fig. 14) than the protruding part 31e of the concave part 31 d of the plate 31.

The protruding part 23c functions as a partition for promoting the accumulation of lubricating oil for lubrication against the seal member 60 (especially, buffer 62) in the fluid storing part 63 that stores the lubricating oil. The height of the protruding part 23c is adjusted so as to restrict lubricating oil accumulated in the fluid storing part 63 from going out of the fluid storing part 63 and allow new lubricating oil to flow into the fluid storing part 63. As needed, one or more holes 26c that the lubricating oil in the inside of the apparatus (in the space within the apparatus except for the fluid storing part 63) flows into and exits from the fluid storing part 63 may be formed in the flange section 26a.

Example 13 achieves the same effects as Example 1.

### Example 14

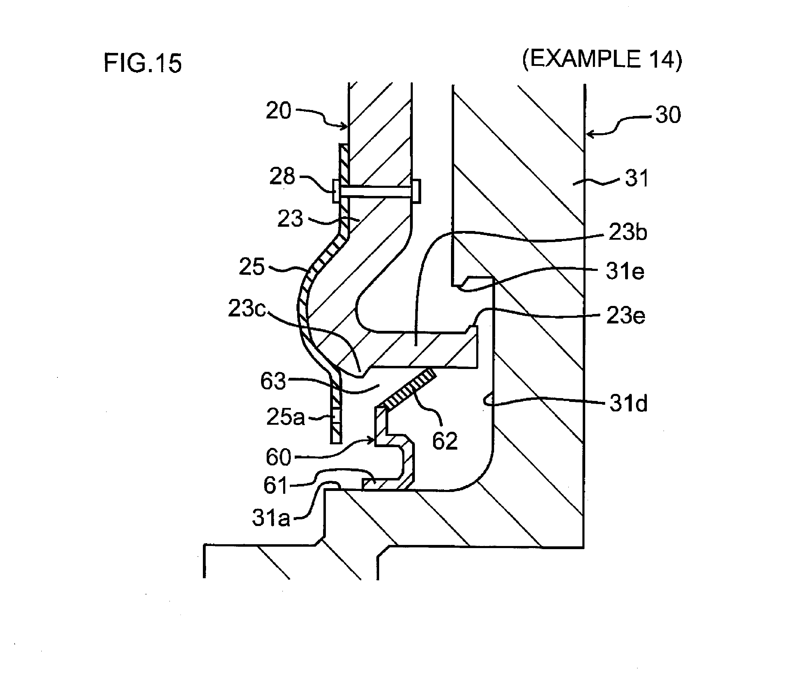

A torque fluctuation absorbing apparatus in accordance with Example 14 of the present invention will be described with reference to figures. Fig. 15 is an enlarged sectional view schematically showing a seal structure of the torque fluctuation absorbing apparatus in accordance with Example 14 of the present invention.

Example 14 is a modification example of Example 1, and to partition the fluid storing part 63, the protruding part 23c is provided on the cylindrical section 23b of the plate 23, and the plate 25 is fixedly coupled to the plate 23. A stepped section (corresponding to 31h in Fig. 12) for positioning the metal ring 61 of the seal member 60 may be formed on the plate 31. Other configuration is the same as that in Example 1.

The plate 25 is an annular member. The plate 25 is fixedly coupled to the inner side of the plate 23 with a rivet(s) 28 (or screw or welding). The plate 25 extends to the inner side than the cylindrical portion 23b of the plate 23 in the radial direction, and is formed so as not to be in contact with the seal surface 31a of the plate 31. The plate 25 functions as a partition for promoting the accumulation of lubricating oil lubricating the seal member 60 (especially, buffer 62) in the fluid storing part 63 that stores the lubricating oil. The radial length of the plate 25 is adjusted so as to restrict lubricating oil accumulated in the fluid storing part 63 from going out of the fluid storing part 63 and allow new lubricating oil to enter the fluid storing part 63. As needed, the plate 25 may have one or more holes 25a so that lubricating oil in the inside of the apparatus (in the space within the apparatus except for the fluid storing part 63) flows into and exits from the fluid storing part 63. The lubricating oil in the inside of the apparatus (in the space within the apparatus except for the fluid storing part 63) flows into and exits from the fluid storing part 63 through the annular clearance between the plate 25 and the seal surface 31a.

Example 14 achieves the same effects as Example 1.

### Example 15

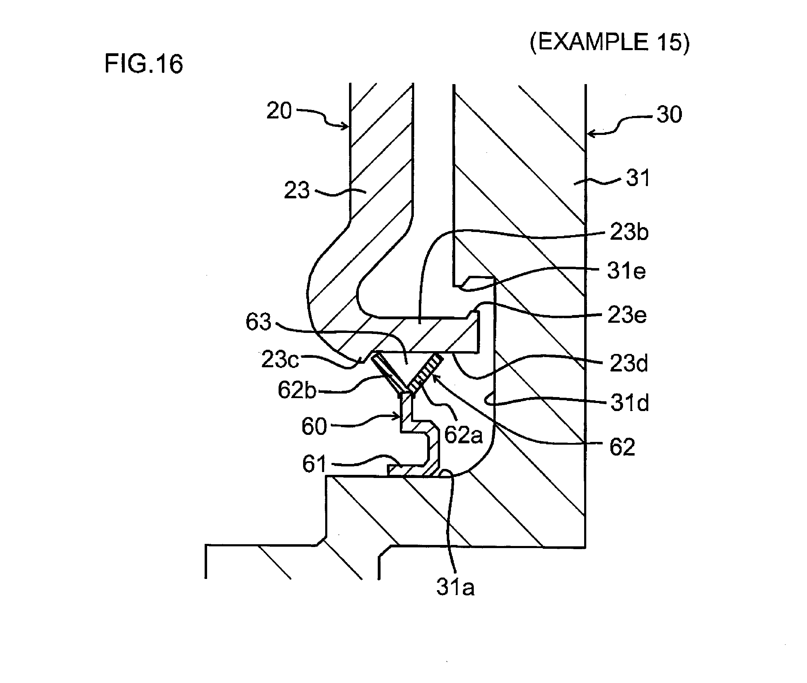

A torque fluctuation absorbing apparatus in accordance with Example 15 of the present invention will be described with reference to figures. Fig. 16 is an enlarged sectional view schematically showing a seal structure of the torque fluctuation absorbing apparatus in accordance with Example 15 of the present invention.

Example 15 is a modification example of Example 1, and the seal member 60 has a double lip structure including the annular protruding section 62a and the annular protruding section 62b of the buffer 62. The seal surface 23d of the plate 23 is in elastic contact with the protruding section 62b in the state where a front end of the protruding section 62b tilts down toward the engine side (left side in Fig. 16). Other configuration is the same as that in Example 1. Such double lip structure can be applied to the other Examples.

Example 15 achieves the same effects as Example 1.

In the scope of whole disclosure (including Claims) of the present invention, Exemplary Embodiment and Examples can be modified and adjusted based on the basic technical concept of the present invention. Further, in the scope of Claims of the present invention, various combination and selection of various disclosed constituents (including each constituent in each claim, each constituent in each Example, each constituent in each figure) can be achieved. That is, as a matter of course, the present invention includes various changes and modifications that could be made by those skilled in the art on the basis of the whole disclosure including Claims and the technical concept.

### [Reference Signs List]

- 1: torque fluctuation absorbing apparatus
- 10: crank shaft
- 10a: flange section
- 10b: cylindrical portion
- 11: bolt
- 20: first flywheel (first rotary member)
- 21: support member
- 21a: cylindrical portion
- 21b: flange portion
- 21c: cylindrical portion
- 21d: flange portion
- 22: plate
- 22a: storing (accommodating) part
- 23: plate (first rotary member)
- 23a: storing part
- 23b: cylindrical section
- 23c: protruding part (first convex part)
- 23d: seal surface
- 23e: protruding part (second convex part)
- 23f: flange section
- 23g: stepped section
- 24: ring gear
- 25: plate
- 25a: hole
- 26: plate
- 26a: flange section
- 26b: cylindrical portion
- 26c: hole
- 27: cylindrical member
- 27a: protruding part
- 28: rivet (coupling member)
- 30: second flywheel (second rotary member)
- 31: plate (second rotary member)
- 31a: seal surface
- 31b: cylindrical section
- 31c: flange section
- 31d: concave part (first concave part)
- 31e: protruding part (third convex part)
- 31f: protruding section (second protruding section)
- 31g: protruding section
- 31h: stepped section
- 32: plate
- 32a: window
- 33: rivet
- 34: plate
- 34a: hole
- 34b: slit
- 35: hub member
- 35a: seal surface
- 35b: concave part (second concave part)
- 36: plate
- 36a: concave part
- 36b: protruding part
- 37: bolt
- 40: damper part
- 41: seat member
- 42: coil spring
- 43: interior space
- 51: ball bearing
- 52: bush
- 53: annular conical spring (Belleville spring)
- 60: seal member
- 61: metal ring
- 62: buffer
- 62a: tongue section
- 62b: protruding section (first protruding section)
- 63: fluid storing part
- 64: seal member
- 64a: tongue section
- 64b: secured (fixed) section
- 65: rivet (coupling member)

## Claims

1. A torque fluctuation absorbing apparatus comprising:
a rotatably-arranged first rotary member (20);
a second rotary member (30) arranged rotatably relative to the first rotary member;
a damper part (40) that absorbs fluctuating torque caused by torsion between the first rotary member and the second rotary member, the damper part being accommodated in an interior space (43) surrounded by the first rotary member and the second rotary member;
a seal member (60; 64) that seals a clearance between the first rotary member and the second rotary member to seal in a fluid stored in the interior space; wherein
the first rotary member has a cylindrical portion (23b) extending toward the second rotary member (30) in an axial direction at a position farther from a rotational axis of the first rotary member (20) than the seal member,
the cylindrical portion has a seal surface (23d) that is flat in a rotational axis direction on an inner peripheral surface, and
the seal member is in elastic contact with the seal surface, **characterized in that**
the cylindrical portion (23b) has an annular protruding portion acting as a partitioning section (23c; 25; 26) protruding in a radially inward direction from the seal surface, defining
a fluid storing part (63) that adjusts entrance/exit of the fluid stored in the interior space and stores the fluid lubricating the seal member.

2. The torque fluctuation absorbing apparatus according to claim 1, wherein
the seal member includes a metal ring (61) secured to the second rotary member (30), and an annular buffer (62) that is fixed to the metal ring and is in elastic contact with the first rotary member.

3. The torque fluctuation absorbing apparatus according to claim 1, wherein
the seal member includes a secured section (64b) secured to the second rotary member, and a tongue section (64a) that extends from the secured section and is in elastic contact with the first rotary member.

4. The torque fluctuation absorbing apparatus according to claims 1 to 3, wherein the partitioning section adjusts entrance/exit of the fluid between the interior space and the fluid storing part.

5. The torque fluctuation absorbing apparatus according to claim 4, wherein
The partitioning section is a first convex portion (23c) formed in the first rotary member.

6. The torque fluctuation absorbing apparatus according to claim 5, wherein
the first convex portion is formed by cutting the seal surface.

7. The torque fluctuation absorbing apparatus according to claim 5, wherein
the first convex portion is formed by pressing.

8. The torque fluctuation absorbing apparatus according to claim 4, wherein
a further partitioning section is a first protruding section (62b) formed on the seal member (60).

9. The torque fluctuation absorbing apparatus according to claim 4, further including a plate (34; 25; 26) fixed to one of the first rotary member and the second rotary member, wherein
the partitioning section and a further partitioning section is the plate.

10. The torque fluctuation absorbing apparatus according to claim 9, wherein
the plate is disposed apart from the other of the first rotary member and the second rotary member, and
the fluid can enter into and exit from the interior space or the fluid storing part through a clearance between the plate and the other of the first rotary member and the second rotary member.

11. The torque fluctuation absorbing apparatus according to claim 10, wherein
the plate (25; 26) is fixed to the first rotary member, and the plate is arranged so as to support a part of the seal member when the part of the seal member leans toward the plate.

12. The torque fluctuation absorbing apparatus according to claim 4, wherein
a further partitioning section is a protruding section (31f) formed on the second rotary member.

13. The torque fluctuation absorbing apparatus according to claim 12, wherein
the second rotary member has an annular first concave part (31d) facing the first rotary member, and
the cylindrical portion (23b) is inserted so as not to come into contact with the first concave part.

14. The torque fluctuation absorbing apparatus according to claim 13, wherein
the cylindrical portion (23b) has a second protruding part (23e) on an outer peripheral surface of a front end,
the first concave part (31d) has a third protruding part (31e) on a wall surface located farther from the rotational axis of the first rotary member than the seal member, and
the second protruding part (23e) is arranged at a position closer to a bottom surface of the first concave part (31d) in the axial direction than the third protruding part (31e).

15. The torque fluctuation absorbing apparatus according to any one of claims 12 to 14, wherein
the cylindrical portion has a flange section (23f) extending from a front end toward the rotational axis of the first rotary member, and
the flange section is arranged between the seal member and the second rotary member in the axial direction.

16. The torque fluctuation absorbing apparatus according to claim 15, wherein
the flange section (23f) is arranged so as to support a part of the seal member when the part of the seal member leans toward the flange section.

17. The torque fluctuation absorbing apparatus according to claim 15 or 16, wherein
the second rotary member has a second concave part (35b) recessed toward the rotational axis of the first rotary member, and
the flange section (23f) extends into the second concave part so as not to come into contact with the second concave part.

18. The torque fluctuation absorbing apparatus according to claim 17, wherein
the second rotary member has divided sections (35, 36) that can be coupled to each other in a range of possible axial positions of the second concave part.

19. The torque fluctuation absorbing apparatus according to any one of claims 1 to 18, which further includes a coupling member (65) for coupling the seal member to the second rotary member.

## Patentansprüche

1. Drehmomentschwankungs-Dämpfungsvorrichtung mit:
einem drehbar angeordneten, ersten Drehelement (20);
einem zweiten Drehelement (30), das relativ zu dem ersten Drehelement drehbar angeordnet ist;
einem Dämpferteil (40), das eine durch Torsion zwischen dem ersten Drehelement und dem zweiten Drehelement verursachte Drehmomentschwankung absorbiert, wobei das Dämpferteil in einem Innenraum (43) aufgenommen ist, der von dem ersten Drehelement und dem zweiten Drehelement umfasst ist;
einem Dichtelement (60; 64), das einen Zwischenraum zwischen dem ersten Drehelement und dem zweiten Drehelement abdichtet, um ein in dem Innenraum gespeichertes Fluid einzuschließen; wobei
das erste Drehelement einen zylindrischen Abschnitt (23b) hat, der sich in Richtung auf das zweite Drehelement (30) in Axialrichtung an einer Stelle erstreckt, die weiter von der Drehachse des ersten Drehelements (20) entfernt ist als das Dichtelement;
der zylindrische Abschnitt eine Dichtfläche (23d) hat, die in Drehachsenrichtung auf einer Innenumfangsfläche flach ist, und
das Dichtelement in elastischem Kontakt mit der Dichtfläche ist,
**dadurch gekennzeichnet, dass**
der zylindrische Abschnitt (23b) einen ringförmigen Vorsprung hat, der als ein Trennbereich (23c; 25; 26) wirkt und in Radialrichtung nach Innen von der Dichtfläche ragt, wodurch
ein Fluidspeicherteilbereich (63) definiert ist, der den Eintritt/Austritt des in dem Innenraum gespeicherten Fluids reguliert und das das Dichtelement schmierende Fluid speichert.

2. Drehmomentschwankungs-Dämpfungsvorrichtung gemäß Anspruch 1, wobei das Dichtelement einen Metallring (61), der an dem zweiten Drehelement (30) befestigt ist, und einen ringförmigen Puffer (62) enthält, der an dem Metallring fixiert ist und im elastischen Kontakt mit dem ersten Drehelement ist.

3. Drehmomentschwankungs-Dämpfungsvorrichtung gemäß Anspruch 1, wobei das Dichtelement einen Befestigungsbereich (64b), der an dem zweiten Drehelement befestigt ist, und einen Zungenbereich (64a) enthält, der sich von dem Befestigungsbereich erstreckt und in elastischem Kontakt mit dem ersten Drehelement ist.

4. Drehmomentschwankungs-Dämpfungsvorrichtung gemäß Anspruch 1 bis 3, wobei der Trennbereich den Eintritt/Austritt des Fluids zwischen dem Innenraum und dem Fluidspeicherteilbereich reguliert.

5. Drehmomentschwankungs-Dämpfungsvorrichtung gemäß Anspruch 5, wobei der Trennbereich ein erster konvexer, in dem ersten Drehelement geformter Abschnitt (23c) ist.

6. Drehmomentschwankungs-Dämpfungsvorrichtung gemäß Anspruch 5, wobei der erste konvexe Abschnitt durch Schneiden der Dichtfläche geformt ist.

7. Drehmomentschwankungs-Dämpfungsvorrichtung gemäß Anspruch 5, wobei der erste konvexe Abschnitt durch Pressen geformt ist.

8. Drehmomentschwankungs-Dämpfungsvorrichtung gemäß Anspruch 4, wobei ein weiterer Trennbereich ein erster hervorragender Bereich (62b) ist, der auf dem Dichtelement (60) geformt ist.

9. Drehmomentschwankungs-Dämpfungsvorrichtung gemäß Anspruch 4, ferner mit einer Platte (34; 25; 26), die an einem des ersten Drehelements und des zweiten Drehelements fixiert ist, wobei
der Trennbereich und ein weiterer Trennbereich eine Platte ist.

10. Drehmomentschwankungs-Dämpfungsvorrichtung gemäß Anspruch 9, wobei
die Platte entfernt von dem anderen des ersten Drehelements und des zweiten Drehelement angeordnet ist, und
das Fluid durch einen Spalt zwischen der Platte und dem anderen des ersten Drehelements und des zweiten Drehelements in den und aus dem Innenraum oder Fluidspeicherteilbereich eintreten und austreten kann.

11. Drehmomentschwankungs-Dämpfungsvorrichtung gemäß Anspruch 10, wobei
die Platte (25; 26) an dem ersten Drehelement fixiert ist, und die Platte derart angeordnet ist, um einen Teil des Dichtelements zu stützen, wenn der Teil des Dichtelements in Richtung der Platte anliegt.

12. Drehmomentschwankungs-Dämpfungsvorrichtung gemäß Anspruch 4, wobei
ein weiterer Trennbereich ein hervorragender Bereich (31f) ist, der auf dem zweiten Drehelement geformt ist.

13. Drehmomentschwankungs-Dämpfungsvorrichtung gemäß Anspruch 12, wobei
das zweite Drehelement einen ringförmigen, ersten konkaven Teilbereich (31d) hat, der dem ersten Drehelement gegenüber liegt, und
der zylindrische Abschnitt (23b) eingefügt ist, um nicht in Kontakt mit dem ersten konkaven Teilbereich zu kommen.

14. Drehmomentschwankungs-Dämpfungsvorrichtung gemäß Anspruch 13, wobei
der zylindrische Abschnitt (23b) einen zweiten hervorragenden Teilbereich (23e) auf einer Außenumfangsfläche eines vorderen Endes hat,
der erste konkave Teilbereich (31d) einen dritten hervorragenden Teilbereich (31e) auf einer Wandfläche hat, die entfernter von der Drehachse des ersten Drehelements als das Dichtelement angeordnet ist, und
der zweite hervorragende Teilbereich (23e) an einer Stelle angeordnet ist, die näher an einer Bodenfläche des ersten konkaven Teilbereichs (31d) in Axialrichtung als der dritte hervorragende Teilbereich (31e) ist.

15. Drehmomentschwankungs-Dämpfungsvorrichtung gemäß irgendeinem der Ansprüche 12 bis 14, wobei
der zylindrische Abschnitt einen Flanschbereich (23f) hat, der sich von einem vorderen Ende in Richtung der Drehachse des ersten Drehelements erstreckt, und
der Flanschbereich zwischen dem Dichtelement und dem zweiten Drehelement in der Axialrichtung angeordnet ist.

16. Drehmomentschwankungs-Dämpfungsvorrichtung gemäß Anspruch 15, wobei
der Flanschbereich (23f) der Art angeordnet ist, um einen Teilbereich des Dichtelements zu stützen, wenn der Teilbereich des Dichtelements in Richtung des Flanschbereichs anlehnt.

17. Drehmomentschwankungs-Dämpfungsvorrichtung gemäß Anspruch 15 oder 16, wobei
das zweite Drehelement einen zweiten konkaven Teilbereich (35b) hat, der in Richtung auf die Drehachse des ersten Drehelements ausgespart ist, und der Flanschbereich (23f) in den zweiten konkaven Teilbereich reicht, um nicht in Kontakt mit dem zweiten konkaven Teilbereich zu kommen.

18. Drehmomentschwankungs-Dämpfungsvorrichtung gemäß Anspruch 17, wobei
das zweite Drehelement geteilte Bereiche (35, 36) hat, die in einem Bereich von möglichen Axialpositionen des zweiten konkaven Teilbereichs miteinander verbunden werden können.

19. Drehmomentschwankungs-Dämpfungsvorrichtung gemäß irgendeinem der Ansprüche 1 bis 18, ferner mit einem Verbindungselement (65), um das Dichtelement mit dem zweiten Drehelement zu verbinden.

## Revendications

1. Appareil d'absorption de fluctuation de couple comportant :
un premier élément rotatif disposé de façon rotative (20) ;
un deuxième élément rotatif (30) disposé de façon rotative par rapport au premier élément rotatif ;
une partie d'amortisseur (40) qui absorbe un couple de fluctuation provoqué par une torsion entre le premier élément rotatif et le deuxième élément rotatif, la partie d'amortisseur étant reçue dans un espace intérieur (43) entouré par le premier élément rotatif et le deuxième élément rotatif ;
un élément de joint d'étanchéité (60 ; 64) qui assure l'étanchéité d'un dégagement entre le premier élément rotatif et le deuxième élément rotatif afin de sceller un fluide stocké dans l'espace intérieur ; dans lequel
le premier élément rotatif a une partie cylindrique (23b) s'étendant vers le deuxième élément rotatif (30) dans une direction axiale dans une position plus loin d'un axe de rotation du premier élément rotatif (20) que l'élément de joint d'étanchéité,
la partie cylindrique a une surface de joint d'étanchéité (23d) qui est plate dans une direction d'axe de rotation sur une surface périphérique intérieure, et
l'élément de joint d'étanchéité est en contact élastique avec la surface de joint d'étanchéité, **caractérisé en ce que**
la partie cylindrique (23b) a une partie saillante annulaire agissant comme une section de séparation (23c ; 25 ; 26) dépassant dans la direction radialement vers l'intérieur depuis la surface de joint d'étanchéité, en définissant
une partie de stockage de fluide (63) qui ajuste une entrée/sortie du fluide stocké dans l'espace intérieur et stocke le fluide lubrifiant l'élément de joint d'étanchéité.

2. Appareil d'absorption de fluctuation de couple selon la revendication 1, dans lequel l'élément de joint d'étanchéité comprend une bague métallique (61) fixée sur le deuxième élément rotatif (30), et un tampon annulaire (62) qui est fixé sur la bague métallique et est en contact élastique avec le premier élément rotatif.

3. Appareil d'absorption de fluctuation de couple selon la revendication 1, dans lequel l'élément de joint d'étanchéité comprend une section fixe (64b) fixée sur le deuxième élément rotatif, et une section de languette (64a) qui s'étend depuis la section fixe et est en contact élastique avec le premier élément rotatif.

4. Appareil d'absorption de fluctuation de couple selon les revendications 1 à 3, dans lequel la section de séparation ajuste une entrée/sortie du fluide entre l'espace intérieur et la partie de stockage de fluide.

5. Appareil d'absorption de fluctuation de couple selon la revendication 4, dans lequel la section de séparation est une première partie convexe (23c) formée dans le premier élément rotatif.

6. Appareil d'absorption de fluctuation de couple selon la revendication 5, dans lequel la première partie convexe est formée en coupant la surface de joint d'étanchéité.

7. Appareil d'absorption de fluctuation de couple selon la revendication 5, dans lequel la première partie convexe est formée par travail à la presse.

8. Appareil d'absorption de fluctuation de couple selon la revendication 4, dans lequel une autre section de séparation est une première section saillante (62b) formée sur l'élément de joint d'étanchéité (60).

9. Appareil d'absorption de fluctuation de couple selon la revendication 4, comprenant en outre une plaque (34 ; 25 ; 26) fixée sur l'un du premier élément rotatif et du deuxième élément rotatif, dans lequel la section de séparation et encore une autre section de séparation sont la plaque.

10. Appareil d'absorption de fluctuation de couple selon la revendication 9, dans lequel
la plaque est disposée à l'écart de l'autre du premier élément rotatif et du deuxième élément rotatif, et
le fluide peut entrer dans et sortir de l'espace intérieur ou de la partie de stockage de fluide à travers un dégagement entre la plaque et l'autre du premier élément rotatif et du deuxième élément rotatif.

11. Appareil d'absorption de fluctuation de couple selon la revendication 10, dans lequel la plaque (25 ; 26) est fixée sur le premier élément rotatif, et la plaque est disposée de façon à supporter une partie de l'élément de joint d'étanchéité quand la partie de l'élément de joint d'étanchéité se penche vers la plaque.

12. Appareil d'absorption de fluctuation de couple selon la revendication 4, dans lequel une autre section de séparation est une section saillante (31f) formée sur le deuxième élément rotatif.

13. Appareil d'absorption de fluctuation de couple selon la revendication 12, dans lequel
le deuxième élément rotatif a une première partie concave annulaire (31d) faisant face au premier élément rotatif, et
la partie cylindrique (23b) est insérée de façon à ne pas venir en contact avec la première partie concave.

14. Appareil d'absorption de fluctuation de couple selon la revendication 13, dans lequel
la partie cylindrique (23b) a une deuxième partie saillante (23e) sur une surface périphérique extérieure d'une extrémité avant,
la première partie concave (31d) a une troisième partie saillante (31e) sur une surface de paroi située plus loin de l'axe de rotation du premier élément rotatif que l'élément de joint d'étanchéité, et
la deuxième partie saillante (23e) est disposée dans une position plus près d'une surface inférieure de la première partie concave (31d) dans la direction axiale que la troisième partie saillante (31e).

15. Appareil d'absorption de fluctuation de couple selon l'une quelconque des revendications 12 à 14, dans lequel
la partie cylindrique a une section de bride (23f) s'étendant depuis une extrémité avant vers l'axe de rotation du premier élément rotatif, et
la section de bride est disposée entre l'élément de joint d'étanchéité et le deuxième élément rotatif dans la direction axiale.

16. Appareil d'absorption de fluctuation de couple selon la revendication 15, dans lequel la section de bride (23f) est disposée de façon à supporter une partie de l'élément de joint d'étanchéité quand la partie de l'élément de joint d'étanchéité se penche vers la section de bride.

17. Appareil d'absorption de fluctuation de couple selon la revendication 15 ou 16, dans lequel
le deuxième élément rotatif a une deuxième partie concave (35b) renfoncée vers l'axe de rotation du premier élément rotatif, et
la section de bride (23f) s'étend dans la deuxième partie concave de façon à ne pas entrer en contact avec la deuxième partie concave.

18. Appareil d'absorption de fluctuation de couple selon la revendication 17, dans lequel le deuxième élément rotatif a des sections divisées (35, 36) qui peuvent être reliées l'une à l'autre dans une plage de positions axiales possibles de la deuxième partie concave.

19. Appareil d'absorption de fluctuation de couple selon l'une quelconque des revendications 1 à 18, qui comprend en outre un élément de liaison (65) destiné à relier l'élément de joint d'étanchéité au deuxième élément rotatif.
